# EUROPEAN PATENT APPLICATION

(11) **EP 4 821 784 A1**
(43) Date of publication of application: **14.10.2026**
(21) Application number: 25888135.8
(22) Date of filing: 10.12.2025
(51) Int. Cl.: B61D 17/02

(54) **FAIRING OPENING AND CLOSING MECHANISM**

(30) Priority: 10.01.2025 CN 202510041515
(71) Applicant: CRRC BRAKING SYSTEM CO., LTD., Qingdao, Shandong 266000 (CN)
(72) Inventor: ZHANG, Guangming, Qingdao, Shandong 266000 (CN); WANG, Kun, Qingdao, Shandong 266000 (CN); LIU, Hui, Qingdao, Shandong 266000 (CN); ZHANG, Chunwei, Qingdao, Shandong 266000 (CN); LIU, Zhanwen, Qingdao, Shandong 266000 (CN); ZHANG, Yuhao, Qingdao, Shandong 266000 (CN); LIU, Xiaobo, Qingdao, Shandong 266000 (CN)
(74) Representative: J A Kemp LLP
(86) International application number: PCT/CN2025/141488
(87) International publication number: WO 2026/098727

(57) **Abstract**

The present application provides a fairing opening and closing mechanism, comprising: a supporting plate; a rotating arm mechanism connected to the supporting plate and the fairing respectively and provided with a pushing member; a main power mechanism, comprising a first adapter rotatably connected with the supporting plate and an electric driving member mounted on the supporting plate to drive the first adapter to rotate; the first adapter is provided with a guide slot and the pushing member is slidably arranged in the guide slot; and an auxiliary power mechanism comprising a second adapter and a gas spring; the gas spring is hinged between the supporting plate and the second adapter; the second adapter is rotatably connected with the supporting plate and is fixedly connected to the pushing member; during an automatic opening and closing process of the fairing, the main and auxiliary power mechanisms drive, in stage, the rotating arm mechanism to move, thereby providing motive power.

## Description

The present application claims the priority benefit of Chinese application No. 2025100415154, filed on January 10, 2025, entitled "Fairing Opening and Closing Mechanism", the entire content of which is hereby incorporated by reference.

### TECHNICAL FIELD

The present application belongs to the technical field of rail vehicles, and particularly relates to a fairing opening and closing mechanism.

### BACKGROUND ART

In the design of modern rail trains, in order to protect equipment such as couplers inside the train, a fairing is usually arranged, and its open and closed states are controlled through an opening and closing mechanism, so as to ensure that the fairing is in a closed position during operation of the train, and the fairing is in an open position when the train needs emergency rescue or reconnection operation, so that the coupler can extend out for coupling.

In order to ensure the reliability of emergency rescue, rail vehicles usually adopt pneumatic cylinders as the power source of the opening and closing mechanism. However, due to the fact that some trains, such as trams and the like, cannot provide an air source to the opening and closing mechanism at the front end, currently the opening and closing mechanism of this type train still adopts a manual operation mode. The opening and closing mechanism of manual operation requires staff to get off the train and manually pull the fairing during operation, which is not only laborious and low in efficiency, but also requires personnel to contact the bottom of the vehicle body during the operation process, presenting potential safety hazards. In some special scenarios, such as severe weather or complex operating environments, the inconvenience brought by manual operation is more obvious.

In the prior art, for trains that cannot provide an air source to the front-end opening and closing mechanism, if automatic opening and closing are to be realized, only an electric cylinder can be used as the driving device. However, different from the characteristic that a pneumatic cylinder can still freely extend and retract in a windless state, the electric cylinder cannot freely extend and retract in an unpowered state, and requires a dedicated tool to perform manual operation at the rear end of the electric cylinder. However, because after the fairing of this type of train is closed, a distance to the ground is too close, the operator cannot observe and cannot touch the electric cylinder inside the opening and closing mechanism, and manual expanding and retracting operations cannot be performed on the opening and closing mechanism using the electric cylinder. In the event of an emergency rescue situation due to train power failure or electric cylinder failure, the fairing of the opening and closing mechanism cannot be opened, and the train coupler cannot extend out for coupling, which will lead to the inability to implement emergency rescue on the train, seriously affecting the safe operation of the train.

### SUMMARY OF THE INVENTION

To address at least one problem existing in the prior art, the present application provides a fairing opening and closing mechanism.

The fairing opening and closing mechanism comprises:
a supporting plate, fixedly mounted on a vehicle body of a train;
a rotating arm mechanism, a first end of which is connected to the supporting plate, and a second end of which is connected to the fairing; the rotating arm mechanism is provided with a pushing member;
a main power mechanism, comprising a first adapter and an electric driving member; wherein, the first adapter is rotatably connected with the supporting plate; the electric driving member is mounted on the supporting plate, and a power output end of the electric driving member is hinged to the first adapter to drive the first adapter to rotate; the first adapter is provided with a guide slot, and the pushing member is slidably arranged in the guide slot; and
an auxiliary power mechanism, comprising a second adapter and a gas spring; a first end of the gas spring is mounted on the supporting plate, and a second end of the gas spring is hinged to the second adapter; the second adapter is rotatably connected with the supporting plate, and is fixedly connected to the pushing member;
wherein, during an automatic opening process and an automatic closing process of the fairing, the main power mechanism and the auxiliary power mechanism drive, in stage, the rotating arm mechanism to move, thereby providing motive power for the fairing.

In one embodiment, the first adapter and the second adapter are both connected with the supporting plate through a rotating shaft; and the two are able to rotate synchronously.

In one embodiment, in the main power mechanism, the guide slot is in an arc-shaped elongated shape, having a first end and a second end oppositely arranged; the first end of the guide slot is closer to the electric driving member and farther away from the fairing than the second end;
in the auxiliary power mechanism, the second adapter has a first edge and a second edge arranged at an angle, the gas spring is hinged to the first edge, and the pushing member of the rotating arm mechanism is fixedly connected to the second edge; the first edge is closer to the gas spring and farther away from the fairing than the second edge.

In one embodiment, when the fairing is in a closed state, the gas spring continuously provides closing driving force to the fairing through the rotating arm mechanism, and the pushing member is located at the first end of the guide slot; when the fairing is in an open state, the gas spring continuously provides opening driving force to the fairing through the rotating arm mechanism, and the pushing member is located at the second end of the guide slot.

In one embodiment, during the automatic opening process, the fairing sequentially passes through a closed position, an intermediate position, and an open position;
in a process of the fairing moving from the closed position to the intermediate position, the power output end of the electric driving member extends out to drive the first adapter to rotate in a first direction, the pushing member is located at the first end of the guide slot and rotates with the first adapter under the push of the guide slot, thereby driving the rotating arm mechanism to move, providing opening driving force for the fairing, and causing the fairing to move to the intermediate position;
in a process of the fairing moving from the intermediate position to the open position, the electric driving member is kept stationary, and the gas spring crosses a mechanical critical point and continues to provide opening driving force for the fairing by the rotating arm mechanism, causing the fairing to continue moving to the open position; during the process, the pushing member slides from the first end to the second end in the guide slot.

In one embodiment, during the automatic closing process, the fairing sequentially passes through the open position, the intermediate position, and the closed position;
in a process of the fairing moving from the open position to the intermediate position, the power output end of the electric driving member retracts to drive the first adapter to rotate in a second direction, the pushing member is located at the second end of the guide slot and rotates with the first adapter under the push of the guide slot, thereby driving the rotating arm mechanism to move, providing closing driving force for the fairing, and causing the fairing to move to the intermediate position;
in a process of the fairing moving from the intermediate position to the closed position, the electric driving member is kept stationary, and the gas spring crosses the mechanical critical point and provides closing driving force for the fairing by the rotating arm mechanism, causing the fairing to continue moving to the closed position; during the process, the pushing member slides from the second end to the first end in the guide slot.

In one embodiment, during a manual opening process of the fairing, an external opening driving force is applied to the fairing to overcome the closing driving force provided by the gas spring, during the process, the pushing member slides from the first end to the second end of the guide slot.

In one embodiment, the rotating arm mechanism comprises a first rotating arm and a connecting member; a first end of the first rotating arm is hinged to the supporting plate, and a second end of the first rotating arm is hinged to the connecting member; an end of the connecting member away from the first rotating arm is connected to the fairing; and the pushing member is arranged on the first rotating arm.

In one embodiment, the rotating arm mechanism further comprises a second rotating arm; a first end of the second rotating arm is hinged to the supporting plate, and a second end of the second rotating arm is hinged to the connecting member; and the first rotating arm and the second rotating arm are arranged substantially parallel to each other.

In one embodiment, the main power mechanism and the auxiliary power mechanism are respectively arranged on two sides of the supporting plate. Specifically, they are respectively located on two opposite side surfaces of the supporting plate.

In one embodiment, the opening and closing mechanism further comprises an adapter member, and the rotating arm mechanism is connected to the fairing through the adapter member.

In one embodiment, the opening and closing mechanism further comprises a locking device, being mounted at a hinging position of the power output end of the electric driving member and the first adapter, and comprising a housing, a locking member, and an elastic member;
the housing is fixedly connected to the first adapter, the locking member is slidably arranged in the housing, and the elastic member is sleeved outside the locking member;
the locking member has a locking position and an unlocking position in the housing; when the locking member slides to the locking position, the locking member penetrates through the first adapter and the power output end of the electric driving member to hinge the first adapter and the power output end of the electric driving member; when the locking member slides to the unlocking position, the first adapter and the power output end of the electric driving member are separated.

In one embodiment, the locking device comprises a housing, a locking member, and an elastic member; wherein,
the housing is provided with a first hole and a second hole, wherein the first hole is closer to the power output end than the second hole;
the locking member is basically a rod body, is slidably arranged in the housing, and has an enlarged first end; the locking member is provided with a protruding block body configured to be able to extend into the first hole or the second hole;
the elastic member is a spring sleeved on the locking member and located between the first end of the locking member and the housing, so as to be able to be compressed;
a second end of the locking member opposite to the first end is able to penetrate through the first adapter and the power output end of the electric driving member;
when the block body of the locking member is located in the first hole, the second end of the locking member reaches the power output end, so that a connection is established between the first adapter and the power output end; when the block body of the locking member is located in the second hole, the second end of the locking member leaves the power output end, so that the connection between the first adapter and the power output end is released.

The beneficial effects of the present application lie in:
1. The opening and closing mechanism provided by at least one embodiment of the present application is provided with two power sources, i.e., the electric driving member and the gas spring, to realize providing stage-wise power for the movement of the rotating arm mechanism. No matter during the automatic opening process or the automatic closing process of the fairing, the power is always provided by the electric driving member at the first stage, and the power is always provided by the gas spring at the second stage, realizing automatic opening and closing of the fairing.
2. In the opening and closing mechanism provided by at least one embodiment of the present application, since the electric driving member does not need to provide a power source for the entire stroke, the volume of the electric driving member can be effectively reduced, thereby narrowing the space occupied by the opening and closing mechanism at the front end of the train.
3. In the opening and closing mechanism provided by at least one embodiment of the present application, by providing the first adapter with the guide slot, when the opening and closing mechanism is in the closed state and the electric driving member is abnormal and cannot act, manual pulling of the fairing can be realized to pull the pushing member in the rotating arm mechanism from the first end to the second end in the guide slot, controlling the rotating arm mechanism to rotate, thereby realizing an emergency operation on the opening and closing mechanism; after the fairing door is opened to the intermediate position, the electric driving member and the rotating arm mechanism are manually separated, thereby achieving complete opening of the opening and closing mechanism, which effectively solves the problem that the electric opening and closing mechanism of a tram cannot undergo an emergency manual operation when there is no electricity or the electric driving member fails.
4. At least one embodiment of the present application provides a fairing opening and closing mechanism with a reliable structure and simple operation, which realizes electric automatic opening and closing of the fairing door, and provides a manual emergency operation function, improving the safety of train operation and the reliability of emergency rescue.

### BRIEF DESCRIPTION OF THE DRAWINGS

FIG. 1 is a perspective view of an opening and closing mechanism according to an embodiment of the present application;
FIG. 2 is a top view of the opening and closing mechanism;
FIG. 3 is a schematic structural view of a main power mechanism and a rotating arm mechanism;
FIG. 4 is a cross-sectional view taken along line B-B of FIG. 3;
FIG. 5 is a schematic view of an auxiliary power mechanism and the rotating arm mechanism;
FIG. 6 is a schematic view of the opening and closing mechanism when a fairing is in a closed position during automatic opening and closing processes;
FIG. 7 is a schematic view of the opening and closing mechanism when the fairing is in an intermediate position during the automatic opening and closing processes;
FIG. 8 is a schematic view of the opening and closing mechanism when the fairing is in an open position during the automatic opening and closing processes;
FIG. 9 is a schematic view of the opening and closing mechanism when the fairing is in a closed position during manual opening and closing processes;
FIG. 10 is a schematic view of the opening and closing mechanism when the fairing is in an intermediate position during the manual opening and closing processes;
FIG. 11 is a schematic view of a locking device;
FIG. 12 is a schematic view of a locking member;
FIG. 13 is a schematic view of a closed state of the opening and closing mechanism;
FIG. 14 is a schematic view of an open state of the opening and closing mechanism;

Wherein: 11 vehicle body, 12 fairing; 2 supporting plate; 3 rotating arm mechanism; 31 first rotating arm; 32 connecting member; 33 pushing member; 34 second rotating arm; 4 main power mechanism; 41 electric driving member, 411 cylinder body, 412 power output end; 42 first adapter; 43 first bracket; 44 rotating shaft; 45 guide slot; 451 first end, 452 second end; 5 auxiliary power mechanism; 51 gas spring; 52 second adapter, 521 first edge, 522 second edge; 53 second bracket; 6 locking device; 61 housing; 62 locking member; 63 elastic member; 7 adapter member.

### DETAILED DESCRIPTION OF THE EMBODIMENTS

The technical solutions of the present application will be described in detail below in conjunction with specific embodiments; however, it should be understood that, in the absence of further description, elements, structures, and features in one embodiment can also be beneficially combined into other embodiments.

In the description of the present application, it should be understood that the terms "first" and "second" are used for descriptive purposes only, and cannot be understood as indicating or implying relative importance or implicitly indicating the number of indicated technical features. Thereby, features defined with "first" and "second" may explicitly or implicitly include one or more of the features.

In the description of the present application, it should be understood that the orientation or positional relationship indicated by terms such as "upper", "lower", "bottom", "inner" and the like are orientation or positional relationships based on the orientation or positional relationship shown in the drawings, which are only for convenience of describing the present application and simplifying the description, rather than indicating or implying that the device or element referred to must have a specific orientation, be constructed and operated in a specific orientation, and therefore cannot be understood as a limitation to the present application.

In the description of the present application, it should be noted that unless otherwise explicitly specified and limited, the terms "connect", "connecting" and "connected" should be understood in a broad sense, for example, it can be a fixed connection, a rotatable connection, a hinged connection, a detachable connection, or an integral connection; it can be directly connected, or indirectly connected through an intermediate medium, or can be the internal communication between two elements. For those of ordinary skill in the art, the specific meanings of the above terms in the present application can be understood according to specific circumstances.

The described embodiments are only descriptions of preferred embodiments of the present application, and are not intended to limit the scope of the present application. Under the premise of not departing from the design spirit of the present application, various modifications and improvements made to the technical solutions of the present application by those of ordinary skill in the art shall fall within the protection scope determined by the claims of the present application.

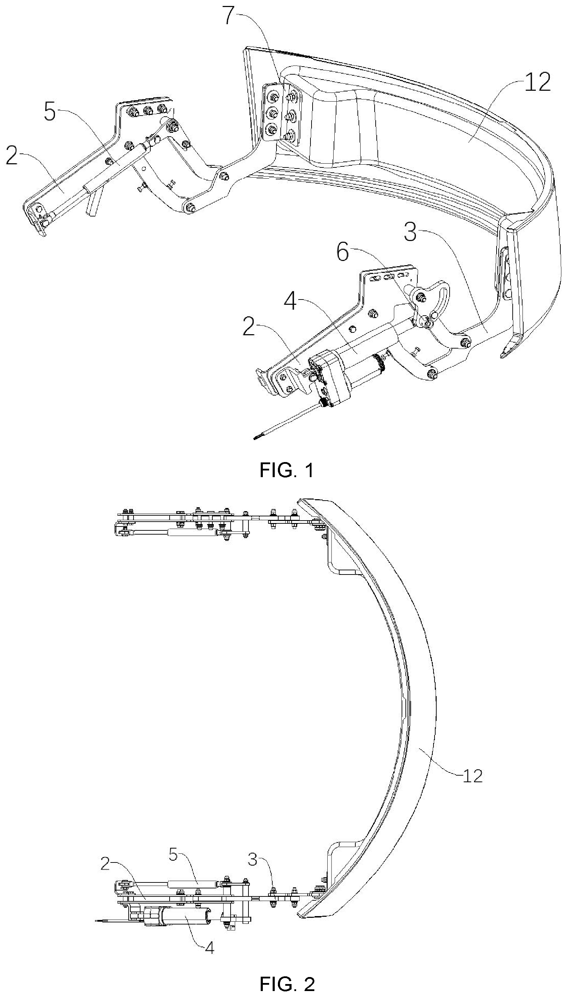

As shown in FIG. 1 and FIG. 2, an embodiment of the present application provides a fairing opening and closing mechanism (hereinafter briefly referred to as the opening and closing mechanism), which is suitable for trains that cannot provide an air source to the opening and closing mechanism at a front end of the vehicle body, such as low-floor trams and the like. The opening and closing mechanism includes a supporting plate 2, a rotating arm mechanism 3, a main power mechanism 4, and an auxiliary power mechanism 5.

The supporting plate 2 is fixed at the front end of the vehicle body 11 of the train; the supporting plate 2 serves as a bearing platform for uniformly fixing the rotating arm mechanism 3, the main power mechanism 4, and the auxiliary power mechanism 5 to the vehicle body 11, thereby forming an integral supporting structure. The supporting plate 2 is fixedly connected to the vehicle body 11 through a reasonable mounting method (such as welding, bolt connection, etc.) to ensure that all components on the supporting plate 2 remain stable during the opening and closing processes of the fairing 12.

A first end of the rotating arm mechanism 3 is connected to the supporting plate 2, and a second end of the rotating arm mechanism opposite to the first end is fixedly connected to the fairing 12. A cylindrical pushing member 33 is arranged on the rotating arm mechanism 3.

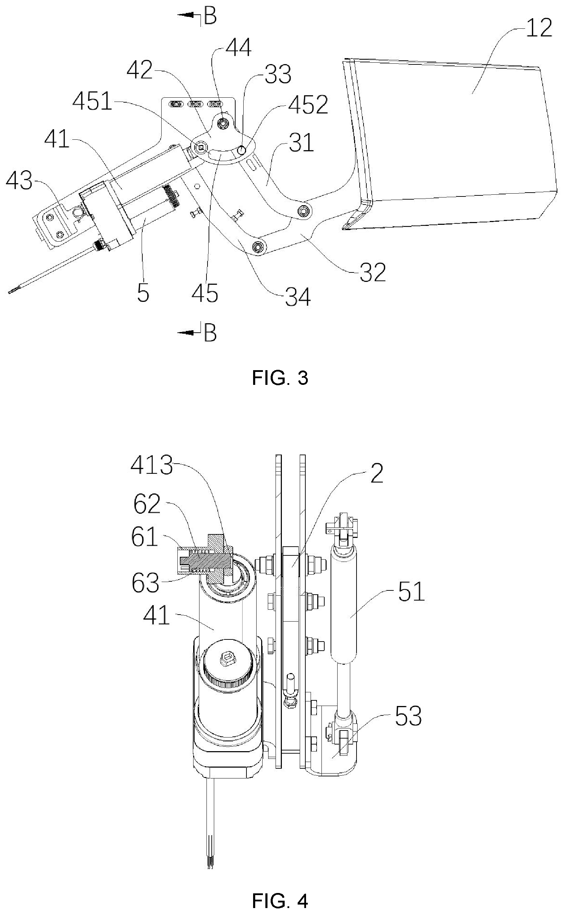

As shown in FIG. 3, the main power mechanism 4 includes a first adapter 42 and an electric driving member 41. Wherein, the first adapter 42 is rotatably connected to the supporting plate 2 through a rotating shaft 44, and can rotate around the rotating shaft 44. The electric driving member 41 is an electric cylinder, a cylinder body 411 thereof is fixedly mounted on the supporting plate 2 through a first bracket 43, and a power output end 412 thereof is hinged to the first adapter 42 to drive the first adapter 42 to rotate around the rotating shaft 44. An arc-shaped, extending guide slot 45 is provided on the first adapter 42, and the guide slot 45 includes a first end 451 and a second end 452 oppositely arranged along the extending direction; the pushing member 33 of the rotating arm mechanism 3 is slidably arranged within the guide slot 45, and is configured to be able to slide between the first end 451 and the second end 452 when the first adapter 42 rotates.

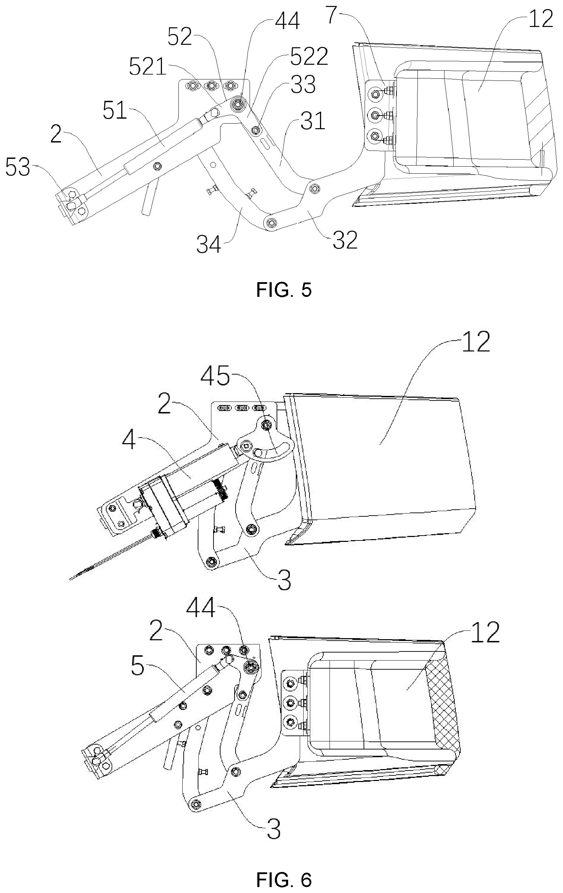

As shown in FIG. 5, the auxiliary power mechanism 5 includes a second adapter 52 and a gas spring 51. A first end of the gas spring 51 is mounted on the supporting plate 2 through a second bracket 53, and an opposite second end of the gas spring 51 is hinged to the second adapter 52. The second adapter 52 is rotatably connected to the supporting plate 2 through the rotating shaft 44, and can rotate around the rotating shaft 44.

In one embodiment, the rotating shaft 44 penetrates through the plate surface of the supporting plate 2 and is rotatably connected to the supporting plate 2, a first end of the rotating shaft 44 is fixedly connected to the first adapter 42, and an opposite second end is fixedly connected to the second adapter 52, so that the first adapter 42 and the second adapter 52 can rotate synchronously. In another alternative embodiment, the first adapter 42 and the second adapter 52 can also be respectively provided with different rotating shafts, and by additionally providing a connecting member (such as a connecting rod) connecting theretween, the two can rotate synchronously; in this case, the two rotating shafts and the connecting member can also be combined and understood as the rotating shaft 44 in the previous embodiment.

In one embodiment, as shown in FIG. 5, the second adapter 52 has a first edge 521 and a second edge 522 arranged at an angle of substantially 90° (which can also be other suitable angles), and the rotating shaft 44 is arranged at the intersection of the two edges. The gas spring 51 is hinged to the first edge 521, and the pushing member 33 of the rotating arm mechanism 3 is fixedly connected to the second edge 522; thereby, the second adapter 52 can be driven to rotate through the gas spring 51, also can be driven to rotate through the pushing member 33.

As shown in FIG. 3, in the main power mechanism 4, the first end 451 of the guide slot is closer to the electric driving member 41 and farther away from the fairing 12 than the second end 452 of the guide slot; as shown in FIG. 5, in the auxiliary power mechanism 5, the first edge 521 of the second adapter 52 is closer to the gas spring 51 and farther away from the fairing 12 than the second edge 522 of the second adapter 52.

In addition, the second bracket 53 may be fixedly mounted on the supporting plate 2 to hinge the first end of the gas spring 51 on the supporting plate 2 through a first hinging point. The gas spring 51 can be purchased from existing products sold on the market, which can continuously provide elastic force. In the present embodiment, when the gas spring 51 is located on a straight line between the second bracket 53 (or the first hinging point) and the rotating shaft 44, the gas spring 51 is compressed to the shortest length, at this time, it is at a mechanical critical point, also referred to as a "dead center". Driven by an external force, the gas spring 51 is able to bypass the "dead center" clockwise or counterclockwise.

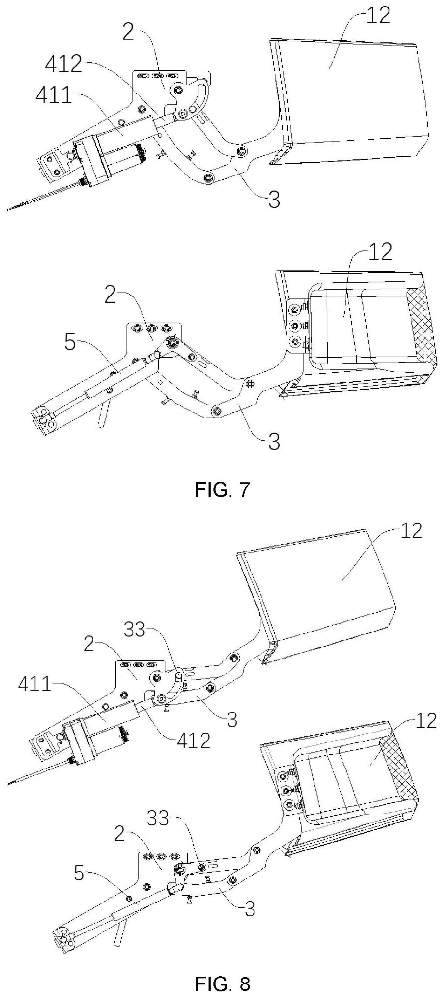

During an automatic opening process and an automatic closing process of the fairing 12, the main power mechanism 4 and the auxiliary power mechanism 5 provide motive power for the fairing 12 in stages. Specifically, in the automatic opening process, the fairing 12 sequentially passes through a closed position, an intermediate position, and an open position (refer to FIG. 6 to FIG. 8); in this process, movement from the closed position to the intermediate position is a first opening stage, and movement from the intermediate position to the open position is a second opening stage. Conversely, the automatic closing process of the fairing 12 sequentially passes through the open position, the intermediate position, and the closed position (refer to FIG. 8 to FIG. 6); in this process, movement from the open position to the intermediate position is a first closing stage, and movement from the intermediate position to the closed position is a second closing stage; wherein, in the first opening stage and the first closing stage, driving forces are provided by the electric cylinder, and in the second opening stage and the second closing stage, driving forces are provided by the gas spring 51, realizing automatic opening and closing of the fairing 12.

Two groups of the supporting plate 2, the rotating arm mechanism 3, the main power mechanism 4, and the auxiliary power mechanism 5 are respectively provided on both sides of the front end of the train, and are arranged opposite to each other. Wherein, the two rotating arm mechanisms 3 are respectively connected to two ends of the fairing 12 in a length direction of the fairing 12; and the two main power mechanisms 4 and the two auxiliary power mechanisms 5 act synchronously, to guarantee the balance of the opening and closing processes of the fairing 12.

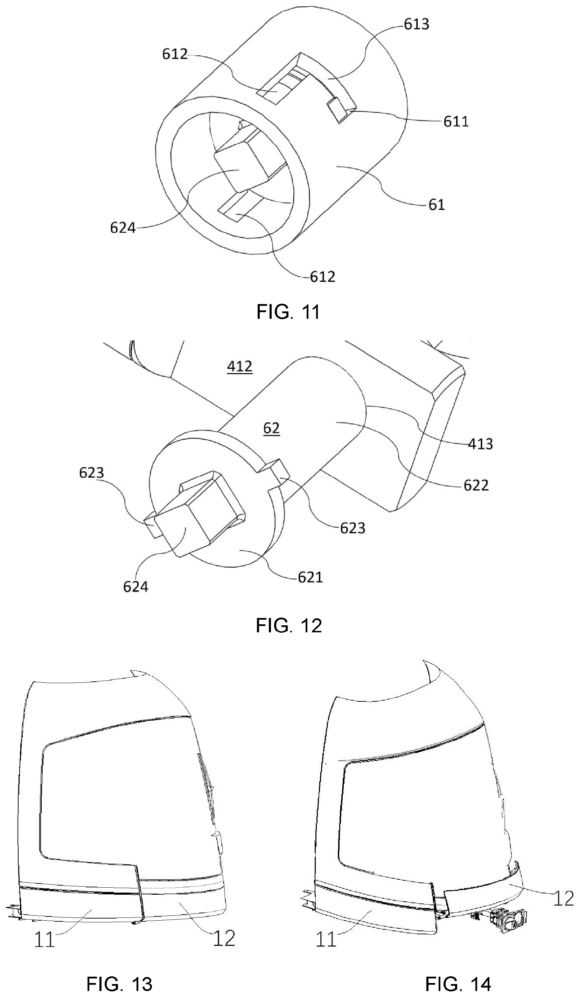

As shown in FIG. 13 and FIG. 14, when closing, the fairing 12 moves downward; when the opening and closing mechanism is in a closed state, it forms a whole with the vehicle body 11 of the train, protecting internal components of the train and ensuring the aesthetics of the train. When opening, the fairing 12 moves upward; when the opening and closing mechanism is in an open state, a coupler extends out from the inside of the vehicle body 11 to realize reconnection with another train.

In order to maintain the fairing 12 at the corresponding position in the open or closed state, in one embodiment, as shown in FIG. 6, when the fairing 12 is in the closed state, the gas spring 51 continuously provides a driving force for keeping closed to the fairing 12 through the rotating arm mechanism 3, so that the fairing 12 maintains a stable closed state; in this state, the pushing member 33 is located at the first end 451 of the guide slot. When the fairing 12 is in the open state, as shown in FIG. 8, the gas spring 51 provides a driving force for keeping open to the fairing 12 through the rotating arm mechanism 3, so that the fairing 12 maintains a stable open state; in this state, the pushing member 33 is located at the second end 452 of the guide slot.

During the automatic opening process, when the fairing 12 is in the closed position, the intermediate position, and the open position, the states of the rotating arm mechanism 3 are shown in FIGs. 6-8. Specifically:
In the process of the fairing 12 moving from the closed position to the intermediate position (FIG. 6 to FIG. 7), the power output end 412 of the electric driving member 41 extends out to drive the first adapter 42 to rotate in a first direction (shown as counterclockwise in the figures), the pushing member 33 keeps at the first end 451 of the guide slot and rotates with the first adapter 42 under the push of the wall of the guide slot, thereby driving the rotating arm mechanism 3 to move, providing an opening driving force for the fairing 12, and causing the fairing 12 to move to the intermediate position. During this process, due to the action of the rotating shaft 44 and the pushing member 33, the second adapter 52 rotates following the first adapter 42 (also shown as counterclockwise in the figures), the gas spring 51 (being gradually compressed) always provides the fairing 12 with a closing driving force opposite to the opening driving force, and the closing driving force provided by the gas spring 51 in this process is smaller than the opening driving force provided by the electric driving member 41. The gas spring 51 is gradually located to the straight line between the first hinging point (the second bracket 53) and the rotating shaft 44, reaches the mechanical critical point, and slightly crosses this point.

In the process of the fairing 12 moving from the intermediate position to the open position (FIG. 7 to FIG. 8), the electric driving member 41 is kept stationary (that is, the power output end 412 becomes stationary), the gas spring 51 crosses its own mechanical critical point (gradually extending) and provides an opening driving force for the fairing 12 through the rotating arm mechanism 3, causing the fairing 12 to continue moving to the open position; during this process, the gas spring 51 pushes the second adapter 52 and the first adapter 42 to rotate, and the pushing member 33 slides from the first end 451 to the second end 452 within the guide slot 45 due to the driving of the rotating arm mechanism 3.

During the automatic closing process, when the fairing 12 is in the closed position, the intermediate position, and the open position, the states of the rotating arm mechanism 3 are shown in FIGs. 6-8. Specifically:
In the process of the fairing 12 moving from the open position to the intermediate position (FIG. 8 to FIG. 7), the power output end 412 of the electric driving member 41 retracts to drive the first adapter 42 to rotate in a second direction (opposite to the first direction, shown as clockwise in the figures), the pushing member 33 is located at the second end 452 of the guide slot and rotates with the first adapter 42 under the push of the wall of the guide slot, thereby driving the rotating arm mechanism 3 to move, providing a closing driving force for the fairing 12, and causing the fairing 12 to move to the intermediate position. During this process, due to the action of the rotating shaft 44 and the pushing member 33, the second adapter 52 rotates following the first adapter 42 (also shown as clockwise in the figures), the gas spring 51 (being gradually compressed) always provides the fairing 12 with an opening driving force opposite to the closing driving force, and the opening driving force provided by the gas spring 51 in this process is smaller than the closing driving force provided by the electric driving member 41. The gas spring 51 is gradually located to the straight line between the first hinging point (the second bracket 53) and the rotating shaft 44, reaches the mechanical critical point, and slightly crosses this point.

In the process of the fairing 12 moving from the intermediate position to the closed position, the electric driving member 41 is kept stationary, the gas spring 51 crosses the mechanical critical point (gradually extending) and provides a closing driving force for the fairing 12 through the rotating arm mechanism 3, causing the fairing 12 to continue moving to the closed position; during this process, the gas spring 51 pushes the second adapter 52 and the first adapter 42 to rotate, and the pushing member 33 slides from the second end 452 to the first end 451 within the guide slot 45 due to the driving of the rotating arm mechanism 3.

In the above embodiments, rotational power is provided to the first adapter 42 through the electric driving member 41, and the pushing member 33 on the rotating arm mechanism 3 is driven to move through the wall of the guide slot 45 on the first adapter 42, thereby driving the rotation of the rotating arm mechanism 3, so as to drive the opening and closing of the fairing 12 in the first stages. At the same time, the gas spring 51 serves as the auxiliary power mechanism 5 to provide extra power support for the fairing 12 in the second stages. Through the staged power output of the main power mechanism 4 and the auxiliary power mechanism 5, automatic opening and closing of the fairing 12 are realized, and the stability and efficiency of the automatic opening and closing of the fairing 12 are improved. Meanwhile, since the electric driving member 41 does not need to provide a power source for the entire stroke, the requirement for its extending stroke is small, which can effectively reduce the volume of the electric driving member 41 and narrow the space occupied by the opening and closing mechanism at the front end of the train.

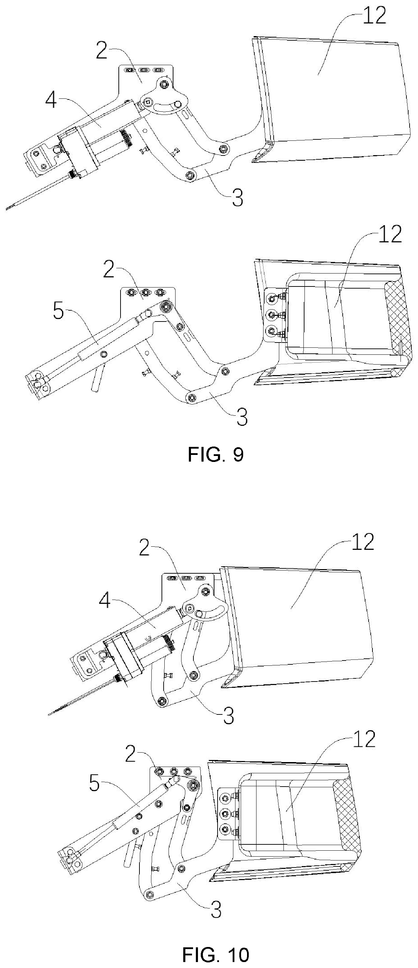

When the fairing 12 is in a closed state (as shown in FIG. 6) and the electric driving member 41 fails and cannot extend out, it is required to manually contact and open the fairing 12. During the manual opening process of the fairing 12, an external opening driving force is applied to the fairing 12 (that is, manually pulling the fairing 12 upward) to overcome the closing driving force provided by the gas spring 51; as shown in FIG. 6 and FIG. 9, in this process, since the external force drives the rotating arm mechanism 3 to rotate counterclockwise and extend, the rotating arm mechanism 3 drives the pushing member 33 to slide from the first end 451 to the second end 452 of the guide slot, at this time, the first adapter 42 does not rotate, the second adapter 52 rotates under the drive of the pushing member 33, and it only needs to overcome the closing driving force provided by the gas spring 51, which will not damage the electric driving member 41. During the manual closing process, when the fairing 12 is in the closed position and the intermediate position, the states of the rotating arm mechanism 3 are shown in FIG. 9 and FIG. 10.

In one embodiment, the opening and closing mechanism further includes a locking device 6, configured to lock or unlock a connection between the power output end 412 of the electric driving member 41 and the first adapter 42.

As shown in FIG. 1, FIG. 4, FIG. 11, and FIG. 12, in one embodiment, the locking device 6 is mounted at a hinging position of the power output end 412 of the electric driving member 41 and the first adapter 42, and includes a housing 61, a locking member 62, and an elastic member 63.

The housing 61 is in a cylindrical shape, and a first end thereof is fixedly connected to the first adapter 42. The locking member 62 is a locking stud or a locking pin, which is slidably arranged in the housing 61. The elastic member 63 is a locking spring, which is arranged in the housing 61 and is sleeved outside the locking member 62.

A locking position and an unlocking position are provided on the housing 61 along a sliding direction of the locking member 62 sliding in the housing 61. When the locking member 62 slides to the locking position, the locking member 62 is in a state of extending out of the housing 61, and an extending end of the locking member 62 penetrates through the first adapter 42 and the power output end 412 of the electric driving member 41 to hinge the two together, at this time, the electric driving member 41 is able to push the first adapter 42 to perform a rotational action. When the locking member 62 slides to the unlocking position, the first adapter 42 and the power output end 412 of the electric driving member 41 are separated, and their respective actions do not affect each other. The elastic member 63 enables the locking member 62 to be firmly fixed regardless of whether the locking member 62 is in the "locking position" or the "unlocking position".

More specifically, as shown in FIG. 11, a first hole 611 and a second hole 612 are provided on the housing 61, wherein the first hole 611 is closer to the power output end 412 than the second hole 612; the first hole 611 serves as the locking position, and the second hole 612 serves as the unlocking position. The two holes may be connected by an extending elongated hole 613.

As shown in FIG. 11, the locking member 62 is roughly a rod body having an enlarged first end 621; the locking spring, serving as the elastic member 63, is not only sleeved on the locking member 62 but also located between the first end 621 of the locking member and the housing 61, so as to be able to be compressed. A protruding block body 623 is further formed on the first end 621 of the locking member, and is configured to be able to extend into the first hole 611 or the second hole 612. A second end 622 of the locking member opposite to the first end 621 serves as the extending end, which can penetrate through the first adapter 42 and the power output end 412 of the electric driving member 41.

Specifically, when the block body 623 of the locking member 62 is located in the second hole 612, the second end 622 of the locking member leaves the power output end 412, so that the connection between the first adapter 42 and the power output end 412 of the electric driving member 41 is released; when rotating the locking member 62 to make it move from the second hole 612 to the first hole 611 along the elongated hole 613, the elastic member 63 is compressed, and the second end 622 of the locking member reaches the power output end 412, so that a connection is established between the first adapter 42 and the power output end 412. Wherein, a groove or a third hole 413 can be opened in the power output end 412 for the second end 622 of the locking member to insert into or leave.

In addition, since the locking member 62 is located in the housing 61, in order to facilitate rotating the locking member 62, a force-applying part 624 is arranged on the first end 621 of the locking member, which can cooperate with equipment such as a wrench to realize rotation of the locking member 62. The force-applying part 624 can be a protruding block shape, or can be a recessed structure, which are well known to those skilled in the art.

The locking device 6 can effectively control the connection state between the first adapter 42 and the electric driving member 41, enabling the opening and closing mechanism to possess locking and unlocking functions, ensuring the controllability of the power output, and avoiding abnormal opening and closing of the fairing 12 due to external forces or misoperation. In addition, the combined structure of the locking member 62 and the elastic member 63 is simple, has high reliability, and is easy to install and maintain. It is worth understanding that the locking device 6 provided by the present embodiment does not constitute a limitation on the present application, and other equipment satisfying the same locking purpose can also be reasonably used in the present application.

In a specific embodiment, as shown in FIG. 3 and FIG. 5, the rotating arm mechanism 3 includes a first rotating arm 31 and a connecting member 32, a first end of the first rotating arm 31 is hinged to the supporting plate 2, and an opposite second end thereof is hinged to the connecting member 32; an end of the connecting member 32 away from the first rotating arm 31 (serving as the second end of the rotating arm mechanism 3) is fixedly connected to the fairing 12. The pushing member 33 is fixedly arranged on the first rotating arm 31 and penetrates through the first rotating arm 31; a first end of the pushing member 33 is connected with the first adapter 42 (slidably located in the guide slot 45), and an opposite second end is connected with the second adapter 52 (fixedly connected to the second edge 522 of the second adapter 52, so that the second adapter 52 moves synchronously with the pushing member 33). Through the joint action of the first rotating arm 31 and the connecting member 32, a stable mechanical transmission structure is formed, which can effectively transmit the movement of the adapter to the fairing 12, ensuring the smoothness and synchronism of the opening and closing actions of the fairing 12.

The rotating arm mechanism 3 can further include a second rotating arm 34, the second rotating arm 34 and the first rotating arm 31 are arranged in parallel, a first end of the second rotating arm is hinged to the supporting plate 2, and an opposite second end is hinged to the connecting member 32. By adding the second rotating arm 34, the mechanical structure of the opening and closing mechanism is further optimized, the load is dispersed, the force on a single rotating arm is reduced, and a transmission mechanism with multiple hinging points is formed, thereby enhancing the stability and load distribution uniformity when the fairing 12 opens and closes.

In one embodiment, the main power mechanism 4 and the auxiliary power mechanism 5 are respectively arranged on two sides of the supporting plate 2 to ensure a balanced force on both sides. Specifically, as shown in FIG. 2, they are respectively arranged on two opposite side surfaces of the supporting plate 2.

The opening and closing mechanism can further include an adapter member 7, and the rotating arm mechanism 3 is connected to the fairing 12 through the adapter member 7. The adapter member 7 can effectively adjust the connection angle and position between the rotating arm mechanism 3 and the fairing 12, ensuring that the transmission of force is more precise, and realizing a firm connection between the rotating arm mechanism 3 and the internal arcuate curved surface of the fairing 12. The connecting member 32 can be an L-shaped metal clip member.

The working principle of the opening and closing mechanism provided by the present application is described below in conjunction with a specific embodiment; wherein, the specific structure of the opening and closing mechanism refers to that shown in FIGs. 1-14. It is worth understanding that this embodiment is only a preferred embodiment of the present application, and cannot be understood as limiting the protection scope of the present application.

The supporting plate 2 is connected to the vehicle body 11.

The first end of the first rotating arm 31 is connected to the supporting plate 2, the second end is connected to the connecting member 32, and the end of the connecting member 32 away from the first rotating arm 31 is fixedly connected to the fairing 12 through the adapter member 7.

The first end of the gas spring 51 is connected to the supporting plate 2 through the second bracket 53, and the second end is hinged to the second adapter 52; the first end of the electric cylinder is connected to the supporting plate 2 through the first bracket 43, and the second end is hinged together with the first adapter 42 through the locking device 6.

Driven by the electric driving member 41 and the gas spring 51 respectively, the first adapter 42 and the second adapter 52 can rotate around the rotating shaft 44.

The second end of the pushing member 33 arranged on the first rotating arm 31 is fixedly connected to the second adapter 52, and the first end is slidably arranged in the special guide slot 45 of the first adapter 42, and can move between the first end 451 and the second end 452 of the guide slot.

The automatic opening process of the opening and closing mechanism provided by the present embodiment is as follows:
Referring to FIG. 6 to FIG. 7, the first stage is from the "closed position" to the "intermediate position", at this time, the first end 451 of the guide slot 45 on the first adapter 42 is in contact with the pushing member 33, and when the electric cylinder provides driving force to start pushing the first adapter 42 to rotate, the first rotating arm 31 can be forced to rotate through the pushing member 33, thereby overcoming the closing driving force provided by the gas spring 51, causing the opening and closing mechanism to reach the "intermediate position". In this process, due to the action of the rotating shaft 44 and the pushing member 33, the second adapter 52 also undergoes rotation.

After reaching the "intermediate position", the electric cylinder stops acting in the second stage, at this time the gas spring 51 has already crossed its mechanical critical point, i.e., the "dead center" position, and the gas spring changes from initially providing the closing driving force to providing the opening driving force, and then it shifts to being driven by the gas spring 51 to make the first rotating arm 31 continue to rotate by the second adapter 52 and the pushing member 33 until reaching the "open position", and the pushing member 33 slides from the first end 451 to the second end 452 in the guide slot of the first adapter 42, as shown in FIG. 7 to FIG. 8.

After reaching the open position, the gas spring 51 continuously provides a locking force for keeping open, making the opening and closing mechanism stably remain at the locked position.

The automatic closing process of the opening and closing mechanism provided by the present embodiment is as follows:
The first stage is from the "open position" to the "intermediate position", at this time, since the second end 452 of the guide slot on the first adapter 42 is in contact with the pushing member 33, the driving force is still provided by the electric cylinder, which begins to retract to drive the first adapter 42 to rotate in a reverse direction, forcing the first rotating arm 31 and the second adapter 52 to rotate through the pushing member 33, overcoming the opening force provided by the gas spring 51, causing the opening and closing mechanism to reach the "intermediate position".

After reaching the "intermediate position", the electric cylinder stops acting in the second stage and reaches a closed position, at this time the gas spring 51 once again crosses its mechanical critical point, i.e., the "dead center" position, changing from initially providing the opening driving force to providing the closing driving force, and then it shifts to being driven by the gas spring 51 to make the first rotating arm 31 continue to rotate by the pushing member 33 until reaching the "closed position", and the pushing member 33 slides from the second end 452 to the first end 451 in the guide slot of the first adapter 42.

After reaching the closed position, the gas spring 51 continuously provides a locking force for keeping closed, making the opening and closing mechanism stably remain at the locked position.

The manual opening process of the opening and closing mechanism provided by the present embodiment is as follows:
When the electric cylinder has no electricity or a fault occurs, the electric cylinder cannot act, and automatic operation cannot be realized; when the fairing 12 is under the closed state, the operator cannot perform a manual unlocking or replacement and maintenance operation on the electric cylinder.

At this time, although the electric cylinder cannot extend out, due to the special design of the guide slot 45 of the first adapter 42, the operator only needs to overcome the closing force of the gas spring 51 and manually pull the fairing 12 to make the first rotating arm 31 rotate, and the pushing member 33 slides from the first end to the second end in the guide slot of the first adapter 42.

Under this intermediate position state, the fairing 12 has already changed from the completely closed position to a semi-open position, and the operator can already observe all components inside the opening and closing mechanism from the outside, and then can perform an unlocking operation on the locking device 6, retracting the locking stud, separating the electric cylinder and the first adapter 42, and then continue to pull the fairing 12 until it is completely open, realizing manual operation under emergency states.

Finally, it should be explained that: each embodiment in the specification is described in a progressive manner, and each embodiment focuses on explaining the differences from other embodiments, and the same or similar parts between the various embodiments can be referred to each other.

The above embodiments are only used to illustrate the technical solutions of the present application rather than to limit them; although the present application has been described in detail with reference to preferred embodiments, those of ordinary skill in the art should understand that: modifications can still be made to the specific embodiments of the present application or equivalent replacements can be made to some of the technical features; without departing from the spirit of the technical solutions of the present application, they all should be covered within the scope of the technical solutions claimed for protection in the present application.

## Claims

1. A fairing opening and closing mechanism, **characterized in that**, comprising:
a supporting plate, fixedly mounted on a vehicle body of a train;
a rotating arm mechanism, a first end of the rotating arm mechanism is connected to the supporting plate, and a second end of the rotating arm mechanism is connected to the fairing; the rotating arm mechanism is provided with a pushing member;
a main power mechanism, comprising a first adapter and an electric driving member; wherein, the first adapter is rotatably connected with the supporting plate; the electric driving member is mounted on the supporting plate, and a power output end of the electric driving member is hinged to the first adapter to drive the first adapter to rotate; the first adapter is provided with a guide slot, and the pushing member is slidably arranged in the guide slot; and
an auxiliary power mechanism, comprising a second adapter and a gas spring; a first end of the gas spring is mounted on the supporting plate, and a second end of the gas spring is hinged to the second adapter; the second adapter is rotatably connected with the supporting plate, and is fixedly connected to the pushing member;
wherein, during an automatic opening process and an automatic closing process of the fairing, the main power mechanism and the auxiliary power mechanism drive, in stage, the rotating arm mechanism to move, thereby providing motive power for the fairing.

2. The fairing opening and closing mechanism according to claim 1, **characterized in that**, the first adapter and the second adapter are both connected with the supporting plate through a rotating shaft; and the first adapter and the second adapter are able to rotate synchronously.

3. The fairing opening and closing mechanism according to claim 1 or 2, **characterized in that**, when the fairing is in a closed state, the gas spring continuously provides closing driving force to the fairing through the rotating arm mechanism, and the pushing member is located at a first end of the guide slot; when the fairing is in an open state, the gas spring continuously provides opening driving force to the fairing through the rotating arm mechanism, and the pushing member is located at a second end of the guide slot.

4. The fairing opening and closing mechanism according to claim 1 or 2, **characterized in that**,
during the automatic opening process, the fairing sequentially passes through a closed position, an intermediate position, and an open position;
in a process of the fairing moving from the closed position to the intermediate position, the power output end of the electric driving member extends out to drive the first adapter to rotate in a first direction, the pushing member is located at a first end of the guide slot and rotates with the first adapter under the push of the guide slot, thereby driving the rotating arm mechanism to move, providing opening driving force for the fairing, and causing the fairing to move to the intermediate position;
in a process of the fairing moving from the intermediate position to the open position, the electric driving member is kept stationary, and the gas spring crosses a mechanical critical point and provides opening driving force for the fairing by the rotating arm mechanism, causing the fairing to continue moving to the open position; during the process, the pushing member slides from the first end to a second end in the guide slot.
during the automatic closing process, the fairing sequentially passes through the open position, the intermediate position, and the closed position;
in a process of the fairing moving from the open position to the intermediate position, the power output end of the electric driving member retracts to drive the first adapter to rotate in a second direction, the pushing member is located at the second end of the guide slot and rotates with the first adapter under the push of the guide slot, thereby driving the rotating arm mechanism to move, providing closing driving force for the fairing, and causing the fairing to move to the intermediate position;
in a process of the fairing moving from the intermediate position to the closed position, the electric driving member is kept stationary, and the gas spring crosses the mechanical critical point and provides closing driving force for the fairing by the rotating arm mechanism, causing the fairing to continue moving to the closed position; during the process, the pushing member slides from the second end to the first end in the guide slot;
during a manual opening process of the fairing, an external opening driving force is applied to the fairing to overcome the closing driving force provided by the gas spring, during the process, the pushing member slides from the first end to the second end of the guide slot.

5. The fairing opening and closing mechanism according to claim 1, **characterized in that**, the rotating arm mechanism comprises a first rotating arm and a connecting member; a first end of the first rotating arm is hinged to the supporting plate, and a second end of the first rotating arm is hinged to the connecting member; an end of the connecting member away from the first rotating arm is connected to the fairing; and the pushing member is arranged on the first rotating arm.

6. The fairing opening and closing mechanism according to claim 5, **characterized in that**, the rotating arm mechanism further comprises a second rotating arm; a first end of the second rotating arm is hinged to the supporting plate, and a second end of the second rotating arm is hinged to the connecting member; and the first rotating arm and the second rotating arm are arranged substantially parallel to each other.

7. The fairing opening and closing mechanism according to claim 1 or 2, **characterized in that**, the main power mechanism and the auxiliary power mechanism are respectively arranged on two sides of the supporting plate.

8. The fairing opening and closing mechanism according to claim 1 or 2, **characterized in that**, the opening and closing mechanism further comprises a locking device, being mounted at a hinging position of the power output end of the electric driving member and the first adapter, and comprising a housing, a locking member, and an elastic member;
the housing is fixedly connected to the first adapter, the locking member is slidably arranged in the housing, and the elastic member is sleeved outside the locking member;
the locking member has a locking position and an unlocking position in the housing; when the locking member slides to the locking position, the locking member penetrates through the first adapter and the power output end of the electric driving member to hinge the first adapter and the power output end of the electric driving member; when the locking member slides to the unlocking position, the first adapter and the power output end of the electric driving member are separated.

9. The fairing opening and closing mechanism according to claim 1 or 2, **characterized in that**, the opening and closing mechanism further comprises an adapter member, and the rotating arm mechanism is connected to the fairing through the adapter member.
